# EUROPEAN PATENT APPLICATION

(11) **EP 4 429 282 A1**
(43) Date of publication of application: **11.09.2024**
(21) Application number: 21963359.1
(22) Date of filing: 02.11.2021
(51) Int. Cl.: H04W 4/40, H04W 4/021, H04W 4/02, G08G 1/16, H04W 88/02

(54) **OPERATION METHOD OF UE RELATED TO INTERACTIVE CROSSING IN V2X**

(71) Applicant: LG Electronics Inc., Yeongdeungpo-gu Seoul 07336 (KR)
(72) Inventor: SHIN, Dongsoo, Seoul 06772 (KR); KIM, Hakseong, Seoul 06772 (KR)
(74) Representative: Frenkel, Matthias Alexander
(86) International application number: PCT/KR2021/015628
(87) International publication number: WO 2023/080259

(57) **Abstract**

An embodiment relates to an operation method of a user equipment (UE) in a wireless communication system, the method comprising: receiving a crossing input from a pedestrian by the UE; configuring a predetermined area on a road on the basis of a position of the pedestrian; selecting a vehicle having a collision possibility when the pedestrian crosses, among vehicles within the predetermined area; transmitting, by the UE, a personal safety message (PSM) including information which relates to a crossing request of the pedestrian and is to be transmitted to one or more vehicles, on the basis of one or more selected vehicles; receiving a basic safety message (BSM) including a response to the crossing request and transmitted from each of the one or more vehicles; and displaying crossing request acceptance information on a display part by the UE, on the basis of the response.

## Description

### TECHNICAL FIELD

The following description relates to a wireless communication system, and more particularly, to a method and device for transmitting a road crossing request and receiving a response by a user equipment (UE) from a vehicle in vehicle-to-everything (V2X) or softV2X.

### BACKGROUND

Wireless communication systems are being widely deployed to provide various types of communication services such as voice and data. In general, a wireless communication system is a multiple access system capable of supporting communication with multiple users by sharing available system resources (bandwidth, transmission power, etc.). Examples of the multiple access system include a code division multiple access (CDMA) system, a frequency division multiple access (FDMA) system, a time division multiple access (TDMA) system, an orthogonal frequency division multiple access (OFDMA) system, and a single carrier frequency division multiple access (SC-FDMA) system, and a multi carrier frequency division multiple access (MC-FDMA) system.

Sidelink (SL) refers to a communication scheme in which a direct link is established between user equipments (UEs) and the UEs directly exchange voice or data without intervention of a base station (BS). SL is considered as a solution of relieving the base station (BS) of the constraint of rapidly growing data traffic.

Vehicle-to-everything (V2X) is a communication technology in which a vehicle exchanges information with another vehicle, a pedestrian, and infrastructure by wired/wireless communication. V2X may be categorized into four types: vehicle-to-vehicle (V2V), vehicle-to-infrastructure (V2I), vehicle-to-network (V2N), and vehicle-to-pedestrian (V2P). V2X communication may be provided via a PC5 interface and/or a Uu interface.

As more and more communication devices demand larger communication capacities, there is a need for enhanced mobile broadband communication relative to existing radio access technologies (RATs). Accordingly, a communication system is under discussion, for which services for UEs sensitive to reliability and latency issues are considered. The next-generation RAT in which evolved mobile broadband (eMBB), machine-type communication (MTC), and ultra-reliable, low-latency communication (URLLC) are considered is referred to as new RAT or new-radio (NR) communication. In NR, V2X communication may also be supported.

### DISCLOSURE

### TECHNICAL PROBLEM

An object of embodiment(s) is to provide contents related to interactive crossing such as a method of transmitting a road crossing request in SoftV2X and receiving a response from a vehicle by a user equipment (UE), and a method of determining and providing whether to accept crossing from the response.

### TECHNICAL SOLUTION

According to an embodiment, an operation method of a user equipment (UE) in a wireless communication system includes receiving a crossing input from a pedestrian by the UE, setting a predetermined area on a roadway based on a location of the pedestrian, selecting a vehicle that is likely to collide during crossing of the pedestrian from among vehicles in the predetermined area, based on that the selected vehicle is one or more vehicles, transmitting a personal safety message (PSM) including information related to a crossing request of the pedestrian, to be transmitted to the one or more vehicles, by the UE, receiving a basic safety message (BSM) including a response to the crossing request, transmitted from each of the one or more vehicles, and based on the response, displaying crossing request acceptance information on a display unit by the UE.

Information related to the crossing request may include a vehicle list field as a set of identifiers of the selected vehicles.

The crossing input may be one of input through a request button of a user interface (UI) of the UE, input through voice recognition, input through a predetermined gesture of the pedestrian, and input after the UE determines crossing intention of the pedestrian.

The predetermined area may be an area input from the pedestrian or may be determined by the UE based on a road width, a lane, and a speed limit.

The selected vehicle may be any vehicle except a vehicle with a speed of 0 within the predetermined area.

The selected vehicle may be a vehicle of which an expected collision time with the pedestrian within the predetermined area falls between a first threshold and a second threshold.

The first threshold may be a minimum time required from a time of receiving the crossing input to a time of displaying the crossing request acceptance information, and the second threshold may be one of a value input from a user, a value determined based on measurement, and a value determined by the UE.

The selected vehicle may be a vehicle closest to the pedestrian for each lane within the predetermined area.

The PSM may be transmitted to a message queuing telemetry transport (MQTT) server, and the MQTT server may transmit the PSM to the one or more vehicles in unicast.

The PSM containing information related to the crossing request may be transmitted immediately regardless of a period of the PSM.

The UE may display the crossing request acceptance information only when approval for the crossing request from all selected vehicles is received before expiration of a predetermined timer.

During crossing of the pedestrian after indicating the acceptance request, the UE may transmit a PSM including a cross state flag related to collision risk notification.

The UE may transmit the PSM with a cross state flag cleared when the pedestrian ends crossing.

Based on absence of the selected vehicle, the UE may display crossing request acceptance information on a display unit.

The UE may communicate with at least one of another UE, a UE related to an autonomous driving vehicle, a base station (BS), or a network.

According to an embodiment, a user equipment (UE) in a wireless communication system includes at least one processor, and at least one computer memory operatively connected to the at least one processor and configured to store instructions that when executed causes the at least one processor to perform operations including receiving a crossing input from a pedestrian, setting a predetermined area on a roadway based on a location of the pedestrian, selecting a vehicle that is likely to collide during crossing of the pedestrian from among vehicles in the predetermined area, based on that the selected vehicle is one or more vehicles, transmitting a personal safety message (PSM) including information related to a crossing request of the pedestrian, to be transmitted to the one or more vehicles, receiving a basic safety message (BSM) including a response to the crossing request, transmitted from each of the one or more vehicles, and based on the response, displaying the crossing request acceptance information on a display unit by the UE.

According to an embodiment, provided is a processor for performing operations for a user equipment (UE) in a wireless communication system, the operations including receiving a crossing input from a pedestrian, setting a predetermined area on a roadway based on a location of the pedestrian, selecting a vehicle that is likely to collide during crossing of the pedestrian from among vehicles in the predetermined area, based on that the selected vehicle is one or more vehicles, transmitting a personal safety message (PSM) including information related to a crossing request of the pedestrian, to be transmitted to the one or more vehicles, receiving a basic safety message (BSM) including a response to the crossing request, transmitted from each of the one or more vehicles, and based on the response, displaying the crossing request acceptance information on a display unit by the UE.

According to an embodiment, provided is a non-volatile computer-readable storage medium storing at least one computer program including an instruction that when executed by at least one processor causes the at least one processor to perform operations for a relay user equipment (UE), the operations including receiving a crossing input from a pedestrian, setting a predetermined area on a roadway based on a location of the pedestrian, selecting a vehicle that is likely to collide during crossing of the pedestrian from among vehicles in the predetermined area, based on that the selected vehicle is one or more vehicles, transmitting a personal safety message (PSM) including information related to a crossing request of the pedestrian, to be transmitted to the one or more vehicles, receiving a basic safety message (BSM) including a response to the crossing request, transmitted from each of the one or more vehicles, and based on the response, displaying the crossing request acceptance information on a display unit by the UE.

### ADVANTAGEOUS EFFECTS

According to an embodiment, pedestrian safety may be more actively promoted by transmitting a crossing request to a selected vehicle through a message queuing telemetry transport (MQTT) server, receiving crossing approval from the vehicles, and notifying the user of this.

### BRIEF DESCRIPTION OF THE DRAWINGS

The accompanying drawings, which are included to provide a further understanding of the disclosure and are incorporated in and constitute a part of this application, illustrate embodiment(s) of the disclosure and together with the description serve to explain the principle of the disclosure. In the drawings:
FIG. 1 is a diagram showing a SoftV2X protocol stack;
FIG. 2 is a flowchart showing an example of performing geocast using a message queuing telemetry transport (MQTT) in SoftV2X;
FIG. 3 illustrates a network topology of Wi-Fi Aware;
FIG. 4 is a flowchart of an overall operation/signaling related to embodiments;
FIGS. 5 to 12 are diagram for explaining embodiment(s); and
FIGS. 13 to 16 are diagrams for explaining various devices to which embodiment(s) are applicable.

### BEST MODE

In various embodiments of the present disclosure, "/" and "," should be interpreted as "and/or." For example, "A/B" can mean "A and/or B." Further, "A, B" can mean "A and/or B." Further, "A/B/C" can mean "at least one of A, B and/or C." Further, "A, B, C" can mean "at least one of A, B and/or C."

In various embodiments of the present disclosure, "or" should be interpreted as "and/or." For example, "A or B" can include "only A," "only B," and/or "both A and B." In other words, "or" should be interpreted as "additionally or alternatively."

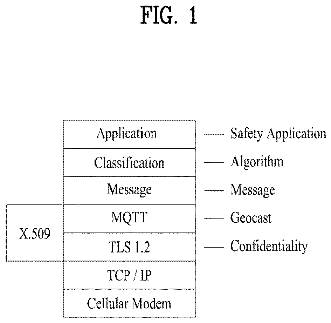

FIG. 1 is a diagram showing a SoftV2X protocol stack operable in a UE, a smartphone, etc. Each layer of the SoftV2X protocol stack will be described with reference to FIG. 1. Here, SoftV2X is one V2X communication method in which a method described below is used, and the following description is not limited to the term SoftV2X. In addition, other terms referring to a communication method corresponding to the following description can also be considered as corresponding to SoftV2X in the present disclosure.

Cellular Modem is a modem that uses cellular networks. A cellular network is a communication network configured and operated by dividing an area into several cells, where a cell means a divided area including a single base station. Cellular network communication technology can include 5G New RAT (NR), Long Term Evolution (LTE), and the like. In SoftV2X, unicast communication is performed unlike in the situation of V2X.

In SoftV2X protocol, a network/transport layer uses IP/TCP used for cellular networks.

Transport Layer Security (TLS) layer is intended to ensure confidentiality using transport layer security, and an authentication certificate uses X.509, a Public Key-based (PKI) ITU-T standard. In addition, SoftV2X protocol is configured to perform the geocast function of sending messages only to users in a specific area. To this end, Message Queuing Telemetry Transport (MQTT), which is an issue-subscription-based messaging protocol, is used.

Subsequently, SoftV2X uses the message defined in SAE J2735 (BSM, PSM, RSA, etc.). SAE J2735 defines signal specifications such as messages, data frames, element formats, structures and the like for V2V/V2I communication, and the main messages are shown in Table 1 below.

**[Table 1]**

| **Main Messages** | **Use range** | **Contents** |
|---|---|---|
| BSM (Basic Safety Message) | V2V | Provides overall safety-related information. Broadcasting communications with periodicity of 100 ms. |
| PVD (Probe Vehicle Data) | V2I | Delivers 'Prove data' collected on a vehicle to RSU. |
| MapData | I2V | Provides information on intersections and road topographic data. |
| SPaT (SinglePhaseAndTiming) | I2V | Used in conjunction with MapData to provide information on signal phase and time synchronization of movement at the intersection. |
| RTCMCorrections (Real-Time Differential Correction Maritime) | I2V | Message to provide RTCM correction information. |
| PSM (PersonalSafetyMessage) | V2P | Provides information about pedestrians in danger range. |
| PDM (ProveData Management) | I2V | Message for managing PVD messages. |
| RSA (RoadSideAlert) | V2X | Supports generation of ad-hoc message from public safety vehicle and RSU. |
| SSM (SignalStatusMessage) | I2V | Used for response to Facility Operational Status Request. |
| SRM (SignalRequestMessage) | V2I | Message for vehicle entering intersection to obtain service information from signal controller. |
| TIM (TravelerInformationMessage) | I2V | Message that conveys information on various traffic information, unexpected situations, pre-road work, etc. |
| CSR (CommonSafetyRequest) | V2V | Request message for data support for safety information exchange. |
| EVA (EmergencyVehicleAlert) | V2X | Deliver information about emergency vehicle. |
| ICA (IntersectionVehicleAlert) | V2X | Deliver information about vehicle hazard conditions near intersections. |
| NMEACorrections | I2V | Used for transmitting message of initial GPS data format on DSRC channel. |
| testMessages00-15 | N/A | Used in customized message format for each use region. |
| Not Assigned | N/A | Assigned when adding new message content. |

Subsequently, a classification layer performs an algorithm to generate data necessary for risk determination. An application layer determines whether or not it is dangerous based on the data that raised Classification, thereby informing pedestrians and drivers carrying smartphones.

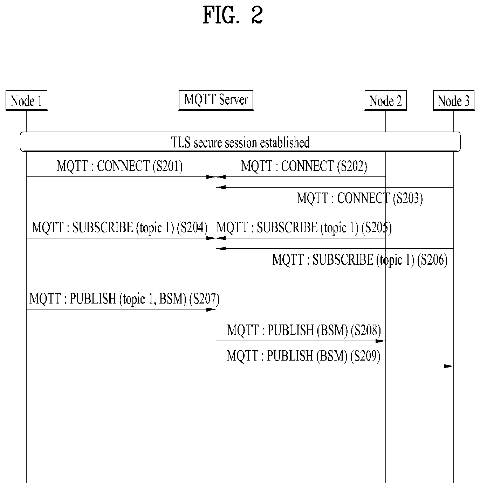

FIG. 2 is a flowchart showing an example of performing geocast using MQTT in SoftV2X. In Legacy V2X, devices in the same region can naturally receive messages (such as BSM, etc.) through a broadcast channel. However, since cellular networks use unicast communication, SoftV2X uses MQTT to perform unicast transmission to all devices in the same region, resulting in broadcast-like effects.

For MQTT communication, a secure session is first set up between all nodes and a server using TLS. Each node can first perform a CONNECT process and then perform a SUBSCRIBE process on a specific topic (S201 to S203 of FIG. 2). In this case, a topic is selected differently depending on a region. A map can be divided by a tile, and the same topic value can be given to each tile. Therefore, each of the nodes performs SUBSCRIBE by selecting a topic according to a tile in which the corresponding node is located. For example, in FIG. 2, Nodes 1, 2, and 3 were all present in the same tile (region and subscribed to the same topic 1 (S204 to 206 in FIG. 2).

When the Node1 transmits PUBLISH (BSM) to the MQTT server (S207), the server delivers the PUBLISH (BSM) in a unicast manner to all nodes having subscribed to the topic1 (S208, S209). Each of the Node 2 and the Node 3 performs Classification and Threat Assessment based on the received BSM message. If detecting danger, the corresponding node informs smartphone users (e.g., pedestrian and driver) of the detection of the danger. A car or vehicle transmits BSM and a pedestrian transmits PSM, and these messages basically contain information (e.g., ID, location, speed, acceleration, direction, etc.) necessary for danger detection.

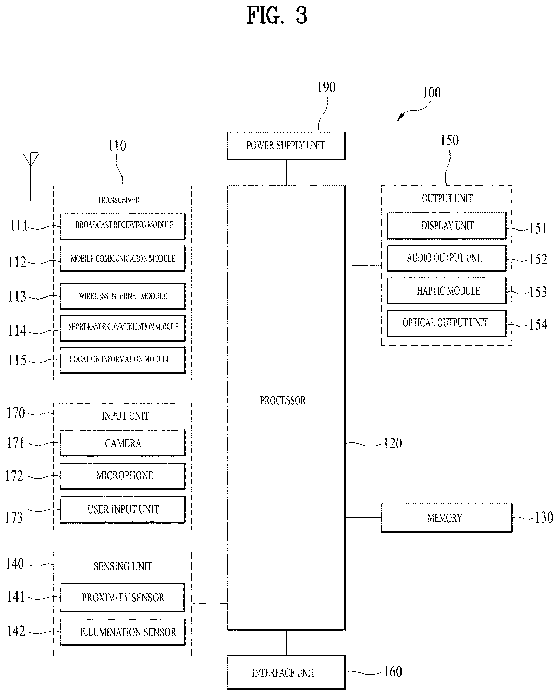

FIG. 3 is a block diagram for explaining user equipment (UE)/mobile terminal/terminal related to the present disclosure. In the following description, a module is a set of devices configured to perform a specific function and may also be referred to as a unit or device.

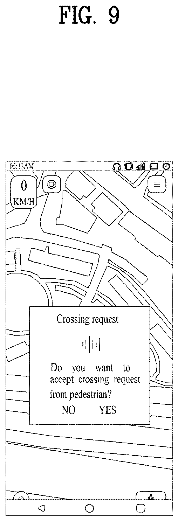

The mobile terminal 100 may include a transceiver 110, a processor 120, a memory 130, a sensing unit 140, an output unit 150, an interface unit 160, an input unit 170, and a power supply unit 190. The components illustrated in FIG. 9 are not required for implementing a mobile terminal, and thus, the mobile terminal described herein may have more or fewer components than those listed above.

The transceiver 110 typically includes one or more modules for performing wireless communication between the mobile terminal 100 and a wireless communication system, communications between the mobile terminal 100 and another mobile terminal 100, or between the mobile terminal 100 and an external server. The transceiver 110 may include one or more modules which connect the mobile terminal 100 to one or more networks.

The transceiver 110 may include at least one of a broadcast receiving module 111, a mobile communication module 112, a wireless Internet module 113, a short-range communication module 114, and a location information module 115.

The input unit 170 may include a camera 171 or an image input unit for inputting an image signal, a microphone 172 or an audio input unit for inputting an audio signal, and a user input unit 173 (e.g., a touch key, a push key or a mechanical key) for allowing a user to input information. Voice data or the image data collected by the input unit 170 may be analyzed and processed as a control command of a user.

The sensing unit 140 may include one or more sensors configured to sense internal information of the mobile terminal, surrounding environment information of the mobile terminal, and user information. For example, the sensing unit 140 may include at least one of a proximity sensor 141, an illumination sensor 142, a touch sensor, an acceleration sensor, a magnetic sensor, a G-sensor, a gyroscope sensor, a motion sensor, an RGB gyro sensor, an infrared sensor (IR sensor), a finger scan sensor, an ultrasonic sensor, an optical sensor (e.g. a camera 171), a microphone 172, a battery gauge, an environmental sensor (e.g. a barometer, a hygrometer, a thermometer, a radioactivity detection sensor, a heat detection sensor, or a gas detection sensor), a chemical sensor (e.g. an electronic nose, a healthcare sensor, or a biometric sensor). The mobile terminal disclosed in the present specification may combine and utilize information sensed by at least two sensors from among the sensors.

The output unit 150 may generate visual, auditory, or tactile output and include at least one of a display unit 151, an audio output unit 152, a haptic module 153, and an optical output unit 154. The display unit 151 may have an inter-layered structure or an integrated structure with a touch sensor, thereby implementing a touch screen. The touch screen may provide an output interface between the mobile terminal 100 and a user, as well as function as the user input unit 173 which provides an input interface between the mobile terminal 100 and the user.

The interface unit 160 serves as an interface with various types of external devices to be coupled to the mobile terminal 100. The interface unit 160 may include at least one of a wired/wireless headset port, an external charger port, a wired/wireless data port, a memory card port, a port for connection of a device having an identification module, an audio input/output (I/O) port, a video I/O port, and an earphone port. The mobile terminal 100 may perform assorted control functions related with a connected external device, in response to the external device connected to the interface unit 160.

The memory 130 stores data to support various functions or features of the mobile terminal 100. The memory 130 may be configured to store a plurality of application programs (application program or application) executed in the mobile terminal 100, and data or instructions for operations of the mobile terminal 100. Some of these application programs may be downloaded from an external server via wireless communication. At least some of the applicable programs may be installed in the mobile terminal 100 at time of manufacturing or shipping, for basic functions of the mobile terminal 100 (for example, receiving a call, placing a call, receiving a message, or sending a message). The application programs may be stored in the memory 130, installed on the mobile terminal 100, and executed by the processor 120 to perform an operation (or function) of the mobile terminal 100.

The processor 120 typically functions to control overall operations of the mobile terminal 100 in addition to the operations related with the application programs. The processor 120 may provide or process a signal, data, or information, which is input or output through the above-described components, or may provide or process information or functions appropriate for the user by driving the application program stored in the memory 130.

The processor 120 may control at least some of the components illustrated in FIG. 9 to drive the application program stored in the memory 130. The processor 120 may operate at least two of the components provided in the mobile terminal 100 in combination to drive the application program.

The power supply unit 190 receives external power and internal power under control of the processor 120 and supplies power to each component provided in the mobile terminal 100. The power supply unit 190 may include a battery, and the battery may be an embedded battery or a replaceable battery.

At least some of the components may cooperatively operate to implement an operation, a control, or a control method of a mobile terminal according to various embodiments described below. The operation, control, or control method of the mobile terminal may be implemented on the mobile terminal by driving at least one application program stored in the memory 130.

Hereinafter, the aforementioned components will be described in more detail with reference to FIG. 9, prior to describing various embodiments implemented through the mobile terminal 100.

Regarding the transceiver 110, the broadcast receiving module 111 of the transceiver 110 receives a broadcast signal and/or broadcast-related information from an external broadcast managing entity via a broadcast channel. The broadcast channel may include a satellite channel and a terrestrial channel. Two or more broadcast receiving modules may be provided to the mobile terminal 100 for simultaneous broadcast reception or broadcast channel switching for at least two broadcast channels.

The mobile communication module 112 transmits and receives a wireless signal to and from at least one of a BS, an external UE, and a server on a mobile communication network according to technical standards or communication schemes (e.g. Global System for Mobile communication (GSM), Code Division Multi Access (CDMA), Code Division Multi Access 2000 (CDMA2000), Enhanced Voice-Data Optimized or Enhanced Voice-Data Only (EV-DO), Wideband CDMA (WCDMA), High Speed Downlink Packet Access (HSDPA), High Speed Uplink Packet Access (HSUPA), Long Term Evolution (LTE), Long Term Evolution-Advanced (LTE-A), or New Radio access technology (3GPP NR)).

The wireless signal may include a voice call signal, a video call signal, or various types of data according to transmission and reception of text/multimedia messages.

The wireless Internet module 113 refers to a module for wireless Internet access and may be embedded in or externally attached to the mobile terminal 100. The wireless Internet module 113 may transmit and/or receive wireless signals via communication networks according to wireless Internet technologies.

The wireless Internet technology includes, for example, Wireless LAN (WLAN), Wireless-Fidelity (Wi-Fi), Wi-Fi Direct, Digital Living Network Alliance (DLNA), Wireless Broadband (WiBro), World Interoperability for Microwave Access (WiMAX), High Speed Downlink Packet Access (HSDPA), High Speed Uplink Packet Access (HSUPA), Long Term Evolution (LTE), Long Term Evolution-Advanced (LTE-A), and 3GPP NR, and the wireless Internet module 113 transmits and receives data according to at least one wireless Internet technology in a range including the Internet technology not listed above.

The wireless Internet module 113, which performs wireless Internet access through the mobile communication network, may be understood as a type of the mobile communication module 112 when the wireless Internet connection by Wibro, HSDPA, HSUPA, GSM, CDMA, WCDMA, LTE, LTE-A, 3 GPP new NR, and the like is performed through a mobile communication network.

The short-range communication module 114 may be for short-range communication, and may support short-range communication by using at least one of Bluetooth^{™}, Radio Frequency Identification (RFID), Infrared Data Association (IrDA), Ultra Wideband (UWB), ZigBee, Near Field Communication (NFC), Wireless-Fidelity (Wi-Fi), Wi-Fi Direct, and Wireless Universal Serial Bus (Wireless USB) technologies. The short-range communication module 114 may support wireless communication between the mobile terminal 100 and a wireless communication system, between the mobile terminal 100 and another mobile terminal 100, or between the mobile terminal 100 and a network in which another mobile terminal 100 (another server) is located, through wireless personal area networks.

Here, another mobile terminal 100 may be a wearable device (e.g., a smart watch, a smart glass, a neckband, or a head mounted display (HMD)), which is exchangeable data (connectable) with the mobile terminal 100. The short-range communication module 114 may sense (or recognize) the wearable device, which is communicable with the mobile terminal 100 around the mobile terminal 100. When the detected wearable device is a device which is authenticated to communicate with the mobile terminal 100 according to the present disclosure, the processor 120 may transmit at least a portion of data processed in the mobile terminal 100 to the wearable device through the short-range communication module 114. Thus, a user of the wearable device may use the data processed in the mobile terminal 100 on the wearable device. For example, when a call is received in the mobile terminal 100, the user may perform a phone call through the wearable device or when a message is received in the mobile terminal 100, the user may check the received message through the wearable device.

The local area communication module 114 makes screen mirroring with a TV located at home or a display inside a vehicle and performs a corresponding function based on, for example, mirrorlink or Miracast standards. The mobile terminal 100 may directly control the display of the TV or the inside of the vehicle.

The location information module 115 is a module for obtaining a location (or current location) of a mobile terminal, and a representative example thereof includes a global positioning system (GPS) module or a wireless fidelity (WiFi) module. For example, the mobile terminal may obtain the location of the mobile terminal by using a signal transmitted from a GPS satellite when the GPS module is utilized. As another example, when a Wi-Fi module is utilized, the mobile terminal may obtain a location of the mobile terminal based on information of a Wireless Access Point (AP) for transmitting or receiving a wireless signal to or from the Wi-Fi-Fi module. As necessary, the location information module 115 may alternatively or additionally perform any of the other modules of the transceiver 110 to obtain data about the location of the mobile terminal. The location information module 115 is a module used to obtain a location (or current location) of the mobile terminal, and is not limited to a module for directly calculating or obtaining the location of the mobile terminal.

Each of the broadcast receiving module 111, the mobile communication module 112, the short-range communication module 114, and the location information module 115 may be implemented as a separate module for performing a corresponding function, or functions corresponding to two or more of the broadcast receiving module 111, the mobile communication module 112, the short-range communication module 114, and the location information module 115 may be implemented by one module.

The input unit 170 is for inputting image information (or signal), audio information (or signal), data, or information input from a user, and the mobile terminal 100 may include one or more cameras 171 for inputting image information. The camera 171 processes image frames of still pictures or video obtained by an image sensor in a video call mode or a photographing mode. The processed image frames may be displayed on the display unit 151 or stored in the memory 130. A plurality of cameras 171 provided in the mobile terminal 100 may be arranged to form a matrix structure, and a plurality of pieces of image information having various angles or focal points may be input to the mobile terminal 100 through the camera 171 forming the matrix structure as described above. The cameras 171 may be located in a stereoscopic arrangement to obtain left and right images for implementing a stereoscopic image.

The microphone 172 processes an external audio signal into electrical voice data. The processed audio data may be variously used according to a function being executed in the mobile terminal 100 (or an application program being executed). Various noise removal algorithms for removing noise generated in a process of receiving an external audio signal may be implemented in the microphone 172.

The user input unit 173 is configured to receive information from a user, and when information is input through the user input unit 173, the processor 120 may control an operation of the mobile terminal 100 to correspond to the input information. The user input unit 173 may include a mechanical input device (or a mechanical key, for example, a button, a dome switch, a jog wheel, or a jog switch located on the front, rear, or side of the mobile terminal 100) and a touch-type input device. For example, the touch-type input device may be a virtual key, a soft key, or a visual key displayed on a touch screen through software processing, or may be a touch key located at a portion other than the touch screen. The virtual key or the visual key may be displayed on a touch screen in various forms, for example, graphic, text, icon, video, or a combination thereof.

The sensing unit 140 senses at least one of internal information of the mobile terminal, surrounding environment information of the mobile terminal, and user information, and generates a corresponding sensing signal. Based on the sensing signal, the processor 120 may control driving or operation of the mobile terminal 100 or perform data processing, functions, or operations related to an application program installed in the mobile terminal 100. Representative examples of various sensors provided in the sensing unit 140 will now be described in more detail.

First, the proximity sensor 141 refers to a sensor that detects the presence or absence of an object approaching or near a predetermined detection surface without mechanical contact by using an electromagnetic field or infrared light. The proximity sensor 141 may be located at an inner region of the mobile terminal covered by the touch screen, or near the touch screen.

Examples of the proximity sensor 141 include a transmissive type photoelectric sensor, a direct reflective type photoelectric sensor, a mirror reflective type photoelectric sensor, a high frequency oscillation type proximity sensor, a capacitance type proximity sensor, a magnetic type proximity sensor, and an infrared ray proximity sensor. When the touch screen is an electrostatic type, the proximity sensor 141 may be configured to detect proximity of the object by a change in an electric field due to proximity of an object having conductivity. In this case, the touch screen (touch sensor) may also be classified as a proximity sensor.

For convenience of description, an operation of recognizing that the object is located on the touch screen close to the touch screen without touching the touch screen will be referred to as a "proximity touch", and an operation in which an object actually comes in contact with the touch screen will be referred to as a "contact touch". A position where the object is in proximity touch on the touch screen means a position in which the object vertically corresponds to the touch screen when the object is closely touched. The proximity sensor 141 may detect a proximity touch and a proximity touch pattern (e.g. a proximity touch distance, a proximity touch direction, a proximity touch speed, a proximity touch time, a proximity touch position, or a proximity touch movement state). As described above, the processor 120 may process data (or information) corresponding to the proximity touch operation and the proximity touch pattern sensed through the proximity sensor 141, and further output visual information corresponding to the processed data on the touch screen. The processor 120 may control the mobile terminal 100 to process different operations or different data (or information) according to whether a touch with respect to the same point on the touch screen is either a proximity touch or a contact touch.

The touch sensor senses a touch (or a touch input) applied to the touch screen (or the display unit 151) by using at least one of various touch methods such as a resistive type, a capacitive type, an infrared type, an ultrasonic type, and a magnetic field method.

For example, the touch sensor may be configured to convert a change in a pressure applied to a specific portion of the touch screen or a capacitance generated in a specific portion into an electrical input signal. The touch sensor may be configured to detect a position, an area, a pressure at a time of touch, a capacitance at the time of touch, and the like, in which a touch object applying a touch on the touch screen is touched on the touch sensor. Here, the touch object is an object that applies a touch to the touch sensor, and may be, for example, a finger, a touch pen, a stylus pen, or a pointer.

As described above, when there is a touch input to the touch sensor, the corresponding signal(s) are transmitted to the touch controller. The touch controller processes the signal(s) and then transmits corresponding data to the processor 120. Accordingly, the processor 120 may recognize which region of the display unit 151 is touched. Here, the touch controller may be a component separate from the processor 120, or the processor 120.

The processor 120 may execute the same or different controls according to a type of touch object that touches the touch screen (or a touch key provided in addition to the touch screen). Whether to execute the same or different control according to a type of touch object may be determined according to an operating state of the mobile terminal 100 or an application program currently executed.

The touch sensor and the proximity sensor described above may be independently or in combination and may sense various types of touches such as a short (or tap) touch, a long touch, a multi touch, a drag touch, a flick touch, a pinch-in touch, a pinch-out touch, a swipe touch, or a hovering touch for the touch screen.

An ultrasonic sensor may recognize location information of a sensing object by using ultrasonic waves. The processor 120 may calculate the location of a wave source through information sensed by an optical sensor and a plurality of ultrasonic sensors. The location of the wave source may be calculated using a very fast property of light than ultrasonic waves, that is, a time when light reaches the optical sensor is very faster than a time at which the ultrasonic wave reaches the ultrasonic sensor. In more detail, the location of the wave source may be calculated using a time difference with a time at which the ultrasonic wave reaches based on light as a reference signal.

The camera 171 may include at least one of a camera sensor (for example, a CCD camera or a CMOS camera), a photo sensor (or an image sensor), and a laser sensor.

The camera 171 and the laser sensor may be combined with each other and may detect a touch of a detection object with respect to a 3D stereoscopic image. The photo sensor may be stacked on the display device, and the photo sensor may be configured to scan a movement of a sensing object close to the touch screen. In more detail, the photo sensor may include photo diodes and transistors at rows and columns to scan contents placed on the photo sensor by using an electrical signal which changes according to the amount of applied light. That is, the photo sensor performs the coordinate calculation of the sensing object according to the amount of change in light, through which the location information of the object to be sensed may be obtained.

The display unit 151 is configured to output information processed in the mobile terminal 100. For example, the display unit 151 may display execution screen information of an application program executed in the mobile terminal 100 or user interface (UI) and graphic user interface (GUI) information according to the execution screen information.

The display unit 151 may be implemented as a stereoscopic display unit for displaying stereoscopic images.

In the stereoscopic display unit, a three-dimensional (3D) display method such as a stereoscopic method (glasses type), an auto stereoscopic method (non-glass method), and a projection method (a holographic method) may be applied.

The audio output module 152 may output audio data received from the transceiver 110 or stored in the memory 130 in a call signal reception mode, a call mode, a recording mode, a voice recognition mode, a broadcast reception mode, and the like. The audio output module 152 may output audible output related to a function (e.g. a call signal reception sound, or a message reception sound) performed by the mobile terminal 100. The audio output module 152 may include a receiver, a speaker, and a buzzer.

The haptic module 153 may be configured to generate various tactile effects that a user experiences. A typical example of a tactile effect generated by the haptic module 153 may be vibration. The strength and pattern of the vibration generated by the haptic module 153 may be controlled by user selection or setting of the processor. For example, the haptic module 153 may output different vibrations in a combining manner or a sequential manner.

In addition to the vibration, the haptic module 153 may generate various tactile effects such as arrangements of pins that move vertically with respect to the contact skin surface, an injection force or suction force of air through an injection port or a suction port, an effect of stimulation on a skin surface, a contact of an electrode, or an electrostatic force, and an effect caused by reproduction of cold and hot sensation by using an endothermic or exothermic element.

The haptic module 153 may also be implemented to allow a user to feel a tactile effect through a muscle sensation such as the fingers or arm of a user, as well as transferring the tactile effect through direct contact. Two or more haptic modules 153 may be provided according to the configuration of the mobile terminal 100.

The optical output module 154 outputs a signal for notifying occurrence of an event using light of a light source of the mobile terminal 100. Examples of events generated in the mobile terminal 100 may include message reception, call signal reception, a missed call, an alarm, a schedule notice, an email reception, and information reception through an application.

The signal output by the optical output unit 154 is implemented as a mobile terminal emits a single color or a plurality of colors to a front surface or a rear surface. The signal output may be terminated by the mobile terminal detecting event confirmation of the user.

The interface unit 160 serves as an interface for external devices to be connected to the mobile terminal 100. The interface unit 160 may receive data from an external device, receive power to transfer to each component in the mobile terminal 100, or transmit internal data of the mobile terminal 100 to an external device. For example, the interface unit 160 may include a wired/wireless headset port, an external charger port, a wired/wireless data port, a memory card port, a port for connecting a device having an identification module, an audio input/output (I/O) port, or an earphone port.

The identification module may be a chip that stores various information for authenticating authority of using the mobile terminal 100 and may include a user identity module (UIM), a subscriber identity module (SIM), and a universal subscriber identity module (USIM). A device having the identification module (hereinafter, referred to as 'identification device') may be manufactured in the form of a smart card. Accordingly, the identifying device may be connected to the terminal 100 via the interface unit 160.

When the mobile terminal 100 is connected to an external cradle, the interface unit 160 may serve as a passage to allow power from the cradle to be supplied to the mobile terminal 100 or may serve as a passage to allow various command signals input by the user from the cradle to be transferred to the mobile terminal 100. The various command signals or the power input from the cradle may operate as a signal for recognizing that the mobile terminal 100 is accurately mounted on the cradle.

The memory 130 may store programs for operations of the processor 120 and temporarily store input/output data (for example, phonebook, messages, still images, or videos). The memory 130 may store data related to various patterns of vibrations and audio which are output in response to a touch input on the touch screen.

The memory 130 may include, for example, a flash memory type, a hard disk type, a solid state disk type, a silicon disk drive type (SDD) type, a multimedia card micro type, a card type memory (e.g. an SD or an XD couple memory), a random access memory (RAM), A storage medium of at least one of a static random access memory (SRAM), a read-only memory (ROM), an electrically erasable programmable read-only memory (EEPROM), a programmable read-only memory (PROM), a magnetic memory, a magnetic disk, and an optical disk. The mobile terminal 100 may also operate in relation to a web storage that performs a storage function of the memory 130 on the Internet.

As described above, the processor 120 may typically control an operation related to an application program and the typically overall operation of the mobile terminal 100. For example, when the state of the mobile terminal satisfies a configured condition, the processor 120 may execute or release a lock state for limiting input of a control command of the user to the applications.

The processor 120 may perform control and processing related with voice calls, data communications, video calls, and the like, or perform pattern recognition processing to recognize a handwriting input or a picture drawing input performed on the touch screen as characters or images, respectively. To implement various embodiments described below on the mobile terminal 100 according to the present disclosure, the processor 120 may control any one or multiple of the above-described components by combining the above-described components.

The power supply unit 190 receives external power and internal power under the control of the processor 120 and supplies power required for the operation of each component. The power supply unit 190 may include a battery, and the battery may be an embedded battery configured to be charged, and may be detachably coupled to s terminal body for charging or the like.

The power supply unit 190 may include a connection port, and the connection port may be configured as an example of the interface 160 to which an external charger for supplying power to charge the battery is electrically connected.

As another example, the power supply unit 190 may be configured to charge the battery in a wireless manner without using the connection port. In this case, the power supply unit 190 may receive power from an external wireless power transmitter using at least one of an inductive coupling method based on magnetic induction or a magnetic resonance coupling method based on electromagnetic resonance.

Various embodiments described herein may be implemented in a computer-readable medium using, for example, software, hardware, or any combination thereof.

The mobile terminal may be extended to a wearable device which may be worn on a human body as well as a device mainly held by the user. Examples of the wearable device include a smart watch, a smart glass, or a head mounted display (HMD). Hereinafter, examples of a mobile terminal expanded to a wearable device will be described.

The wearable device may exchange data (be connected) with another mobile terminal 100. The short-range communication module 114 may sense (or recognize) the wearable device, and may allow communication between the wearable device and the mobile terminal 100. When the sensed wearable device is a device which is authenticated to communicate with the mobile terminal 100, the processor 120 may transmit at least a portion of data processed in the mobile terminal 100 to the wearable device through the short-range communication module 114. Thus, the user may use the data processed in the mobile terminal 100 on the wearable device. For example, when a call is received in the mobile terminal 100, a phone call may be performed through the wearable device, or when a message is received in the mobile terminal 100, the received message may be checked through the wearable device.

Currently, SoftV2X determines a risk and indicates the risk to pedestrians (Vulnerable Road Users (VRU)) or a driver through a user interface (UE) by using a received message and own information when the risk is detected. In other words, the current method generally expects the vehicle to recognize pedestrians and stop, and then cross a road when the vehicle stops. In other words, it is impossible for pedestrians to transmit their intention to cross the road to vehicles, and there is only a method of expecting pedestrians to be passively protected by vehicles.

Beyond passive pedestrian protection, a technology may be required for a method for pedestrians to actively request safety and be protected. For example, as in the following embodiment of the present disclosure described below, when a pedestrian crosses a road, he or she may transmit a request to cross the road to surrounding vehicles and is on standby for a response. Surrounding vehicles stop in response to a pedestrian request and respond to the pedestrian request. The pedestrian who receives the response crosses a road and periodically informs surrounding vehicles that he or she is crossing the road. When a pedestrian finish crossing the road, information that they finish crossing the road is transmitted to surrounding vehicles. Surrounding vehicles that receive this message begin moving. Hereinafter, detailed methods for realizing this method will be described in detail.

In a (pedestrian) user equipment (UE) according to an embodiment, the UE may receive a crossing input from a pedestrian and configure a predetermined area on a roadway based on the location of the pedestrian. From among the vehicles in the predetermined area, a vehicle that is likely to collide when a pedestrian crosses a road is selected, and based on that there is more than one selected vehicle, the UE may transmit a personal safety message (PSM) message including information related to a crossing request of the pedestrian, to be transmitted to the one or more vehicles. Then, a basic safety message (BSM) containing a response to the crossing request, transmitted from each of the one or more vehicles, is received, and based on the response, the UE displays crossing request acceptance information on the display unit. The pedestrian may check the crossing request acceptance information and cross a roadway.

As such, the UE (or an application installed on the UE) may promote pedestrian safety by transmitting the crossing request to a selected vehicle through a message queuing telemetry transport (MQTT) server, receiving crossing approval from the vehicles, and notifying the user of this.

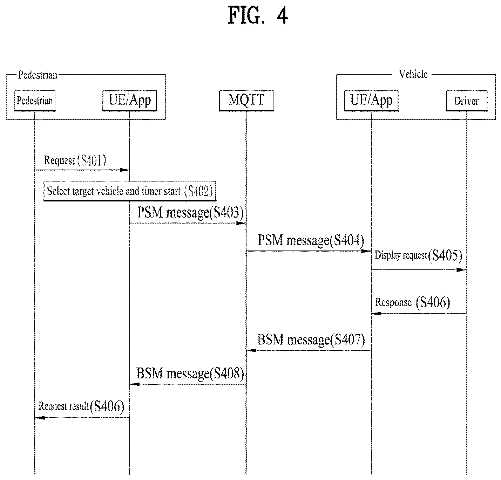

A detailed method for performing the above-described embodiment will be described in detail in the order of operations with reference to FIG. 4.

FIG. 4 shows an operation/signaling performed in each device in the above embodiment. Referring to FIG. 4, the pedestrian requests crossing through UE/application (App) (S401). The crossing request may be receiving a crossing input from a pedestrian by the UE/App. The crossing input may be one of input through a request button of a user interface (UI) of a UE, input through voice recognition, input through a predetermined gesture of the pedestrian and input after the UE determines crossing intention of the pedestrian.

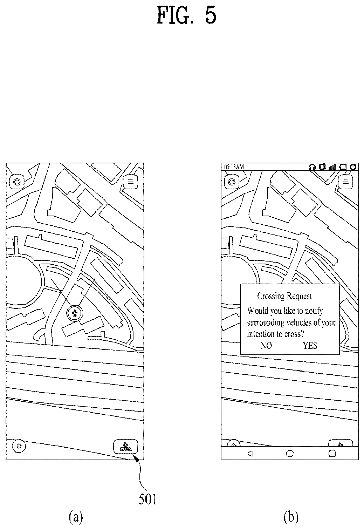

In other words, a request that a pedestrian wants to cross a road may be transmitted to the App through the request button on the UI. For example, as shown in (a) of FIG. 5, a map and location of the current pedestrian, and a crossing button 501 may be displayed on the display unit of the UE. When the pedestrian touches the crossing button 501, a pop-up window asking for the crossing request as shown in (b) of FIG. 5 is displayed, and the UE may receive the crossing input by touching a button 'Yes' of the pop-up window by the UE.

As another example, a request to cross the road may be made through voice recognition. The crossing request may be started when a predefined pattern is recognized by the App by registering the corresponding pattern. Alternatively, a specific gesture is registered in the App, and when a pedestrian makes this gesture, the crossing request may be started. According to AI technology, when a pattern of the pedestrian is recognized and the pedestrian is determined to intend to cross the road the request may be started.

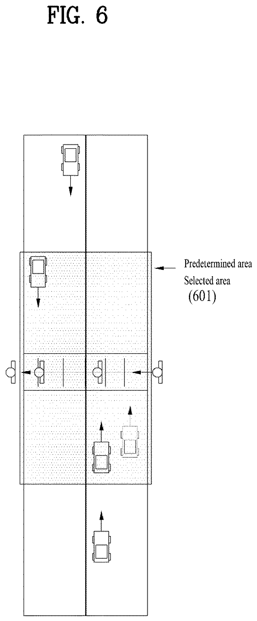

Continuously, referring back to FIG. 4, when a crossing request/input of the pedestrian occurs, a target vehicle may be selected and a timer may be started (S402). In detail, when the UE receives a crossing input from the pedestrian, a predetermined area may be set on a roadway based on the location of the pedestrian. Here, the predetermined area may be an area input from the pedestrian or determined by the UE based on a road width, a lane, and a speed limit. In detail, the UE/App calculates a horizontal distance (based on a roadway crossing direction of the pedestrian) by using map information, width information or the number of lanes of a road in which a user is located, and receives a request message to calculate a vertical distance from a measured distance at which a vehicle stops safely in consideration of a speed limit on the road. This is based on the assumption that the predetermined area is a rectangular area based on pedestrians, and the predetermined area may be a rectangular area 601 as illustrated in FIG. 6 . The rectangular area may be received from a pedestrian through a UI. The pedestrian may input a width and a height based thereon. Alternatively, a rectangular area based on a UE may be received using a touch method on a map displayed on the display unit of the UE. When a predetermined area is received from a user, a maximum value is set by considering a road width, a lane, and a speed limit to prevent vehicles from receiving crossing requests unnecessarily by inputting an excessively large area, and the maximum value may be replaced with a final user input value when the value exceeds the maximum value.

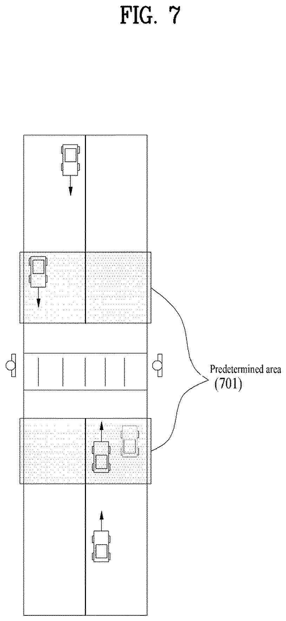

The predetermined area may be configured in the form of two rectangular areas, as illustrated in FIG. 7. Some time is required between transmission of a crossing request from a pedestrian and reception of responses from a vehicle, and there is no need to transmit the crossing request to the vehicle passing through a crossing area of the pedestrian within this time. In other words, vehicles very close to a crossing position of the pedestrian do not need to be selected, and thus the predetermined area may be configured into two rectangular shapes in consideration of this from the beginning.

From among vehicles in the predetermined area, a vehicle that is likely to collide when crossing the pedestrian may be selected. The selected vehicle may be any vehicle except for a vehicle with a speed of 0 within the predetermined area. Alternatively, the selected vehicle may be a vehicle closest to the pedestrian for each lane within the predetermined area. In other words, from among the vehicles, only the vehicle closest to the pedestrian for each lane may be selected. This is because a vehicle behind in the same lane will slow down or stop accordingly when a vehicle in front stops or slows down, and thus there is no need to transmit a message.

In consideration of an (expected) collision time from the vehicle to the pedestrian, a vehicle of which an (expected) collision time is below a threshold may be selected. Vehicles that exceed the threshold may protect pedestrians under determination of a driver. The maximum value may be received from the pedestrian or determined by the UE/App. Alternatively, the maximum value may be determined through measurement.

Alternatively, the selected vehicle may be a vehicle of which an expected collision time with the pedestrian within the predetermined area falls between a first threshold and a second threshold. Here, the first threshold and the second threshold may be the minimum and maximum values, respectively, from among the threshold values of the (expected) collision time between the pedestrian and the vehicle. In other words, only a vehicle included between the maximum and minimum values of the threshold by specifying the maximum and minimum values for the threshold of the (expected) collision time between a pedestrian and a vehicle. This is because, when the (expected) collision time is less than the minimum time, the pedestrians may not be able to stop at the crossing or may pass by even if requested. The first threshold may be the minimum time required from a time point of receiving the crossing input to a time point of displaying the crossing request acceptance information, and the second threshold may be one of a value input from the user, a value determined based on measurement, and a value determined by the UE.

As described above, when the UE completes selection of a vehicle to transmit a crossing request, the crossing request may be transmitted to the target vehicle. Transmission of the request may be performed when there is at least one selected vehicle. That is, based on that there is more than one selected vehicle, the UE may transmit a personal safety message (PSM) containing information related to the crossing request of the pedestrian to be transmitted to the one or more vehicles. As shown in FIG. 4, the PSM may be transmitted to a MQTT server (S403), and the MQTT server may transmit the PSM to the one or more vehicles by unicast (S404).

Information related to the crossing request may include a vehicle list field that is a set of identifiers of the selected vehicles. In other words, the identifiers of vehicles to be requested to cross the road are added to the existing PSM and transmitted, allowing recognition of the target vehicles. For example, a vehicle list field is added using the cross request field and reserved field in the PSM, ID information of target vehicles is added and transmitted to the MQTT server, and this information is transmitted in unicast format to vehicles in the same area. The PSM modified in this way may be as illustrated in Table 2 below. In Table 2 above, the underlined part is content added to the existing PSM.

**[Table 2]**

| |
|---|
| typedef struct PersonalSafetyW VicMessage { |
| PersonalDeviceUserType_t basicType; |
| DSecond_t secMark; |
| MsgCount_t msgCnt; |
| TemporaryID_t id; |
| |
| PersonalCrossingRequest_t *crossRequest; /* OPTIONAL */ |
| |
| Attachment_t *attachment; /* OPTIONAL */ |
| AttachmentRadius_t *attachmentRadius;/* OPTIONAL */ |
| AnimalType_t *animalType; /* OPTIONAL */ |
| struct VehicleIdList *vehicleIds; /* OPTIONAL */ |
| struct PersonalSafetyWVicMessage_regional { |
| A_SEQUENCE_OF(struct Reg_BasicSafetyMessage) list; |
| /* Context for parsing across buffer boundaries */ |
| asn_struct_ctx_t_asn_ctx; |
| } *regional; |
| /* |
| * This type is extensible, |
| * possible extensions are below. |
| */ |
| /* Context for parsing across buffer boundaries */ |
| asn_struct_ctx_t_asn_ctx; |
| } PersonalSafetyWVicMessage_t; |
| typedef struct VehicleldList { |
| A_SEQUENCE_OF(TemporaryID_t) list; |
| /* Context for parsing across buffer boundaries */ |
| asn_struct_ctx_t_asn_ctx; |
| } VehicleIdList_t; |
| typedef OCTET_STRING_t TemporaryID_t; |

The PSM containing information related to the crossing request may be transmitted immediately regardless of a period of the PSM. When a predetermined timer starts after a message is transmitted and there is no response within a certain time, the pedestrian is notified through the UI that there is no response.

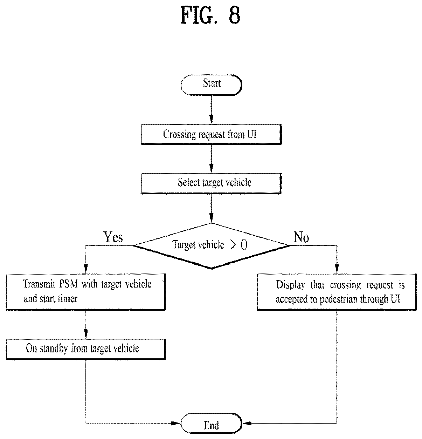

As described above, after a crossing input of the pedestrian (crossing request from a UI) occurs, a target vehicle may be selected, a PSM may be transmitted, a response may be on standby, and this procedure is illustrated in FIG. 8.

Referring back to FIG. 4, when the vehicle receives the PSM (S404), if the vehicle is contained in a vehicle list, this request is transmitted to the driver through the UI. In detail, voice recognition or a method using a button (for example, a button displayed on the display unit as shown in FIG. 9) may be used. After the request is transmitted to the driver through the UI, an additional request may be transmitted from another pedestrian until a response is received from the driver, and in this case, any response is not transmitted to the driver through the UI, and when an ID of the pedestrian transmitting the request is stored in the APP and then a response is received from the driver, the same response is collectively transmitted to each pedestrian. When the driver does not receive the request of the UI or is not capable of responding for a long time, the previously displayed UI is removed and a rejection response is transmitted to the pedestrian.

When the vehicle and the App are linked, if a pedestrian receives a message indicating the pedestrian wants to cross a road, the vehicle may transmit an acceptance response, slow down or stop, and display the corresponding message to the driver. In the case of an autonomous driving vehicle, when the vehicle is linked with the SoftV2X App, the App may transmit an acceptance message to the autonomous driving vehicle (or a controller of the autonomous driving vehicle) in response to a request of a pedestrian, and the autonomous driving vehicle may slow down or stop and then transmit the result to the App to be transmitted to the pedestrian. When the App receives a crossing request of the pedestrian, the App may transmit the acceptance response and transmit a request message to the autonomous driving vehicle to slow down or stop.

The response determined by the driver through the UI is transmitted to the SoftV2X App to be transmitted. When the autonomous driving vehicle is linked with the SoftV2X App, the response determined by the autonomous driving vehicle may be transmitted to the SoftV2X App to be transmitted. A message transmitted from the vehicle may be a BSM, and to support a response function, a reserved field of an existing BSM may be used, and ID information and response of the pedestrian may be added to this field and transmitted. The BSM is transmitted periodically, but when this response needs to be transmitted together, the message needs to be transmitted immediately when an event occurs. The BSM related to an embodiment may be as shown in Table 3 below, and the underlined part is content added to the existing BSM.

**[Table 3]**

| |
|---|
| typedef struct BasicSafetyWVicMessage { |
| BSMcoreData_t coreData; |
| struct BasicSafetyWVicMessage_partII { |
| A_SEQUENCE_OF(struct BSMpartIIExtension) list; |
| /* Context for parsing across buffer boundaries */ |
| asn_struct_ctx_t_asn_ctx; |
| } *partII; |
| struct PSMcrossRequestAckList *crossReqAcks; /* OPTIONAL */ |
| struct BasicSafetyWVicMessage_regional { |
| A_SEQUENCE_OF(struct Reg_BasicSafetyMessage) list; |
| /* Context for parsing across buffer boundaries */ |
| asn_struct_ctx_t_asn_ctx; |
| } *regional; |
| /* |
| * This type is extensible, |
| * possible extensions are below. |
| */ |
| /* Context for parsing across buffer boundaries */ |
| asn_struct_ctx_t_asn_ctx; |
| } BasicSafetyWVicMessage_t; |
| typedef struct PSMcrossRequestAckList { |
| A_SEQUENCE_OF(struct PSMcrossRequestAck) list; |
| /* Context for parsing across buffer boundaries */ |
| asn_struct_ctx_t_asn_ctx; |
| } PSMcrossRequestAckList_t; |
| typedef struct PSMcrossRequestAck { |
| TemporarylD_t id; |
| Acknowledge_t ack; |
| /* Context for parsing across buffer boundaries */ |
| asn_struct_ctx_t_asn_ctx; |
| } PSMcrossRequestAck_t; |

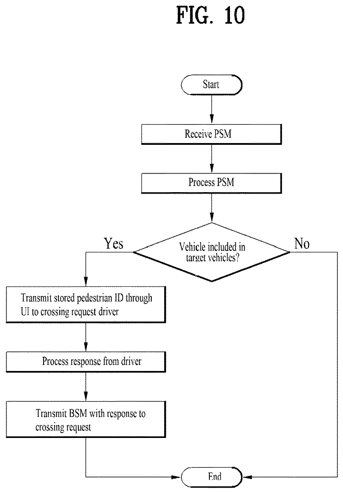

FIG. 10 is a flowchart related to an operation in a vehicle as described above.

Referring back to FIG. 4, a UE may receive a BSM of the vehicle from an MQTT server. In FIG. 4, only one vehicle is shown as an example, but when there is more than one vehicle to which the PSM is transmitted, a basic safety message (BSM) containing a response to the crossing request, transmitted from each of more than one vehicle, is received.

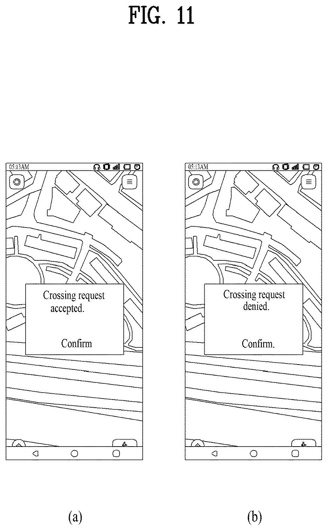

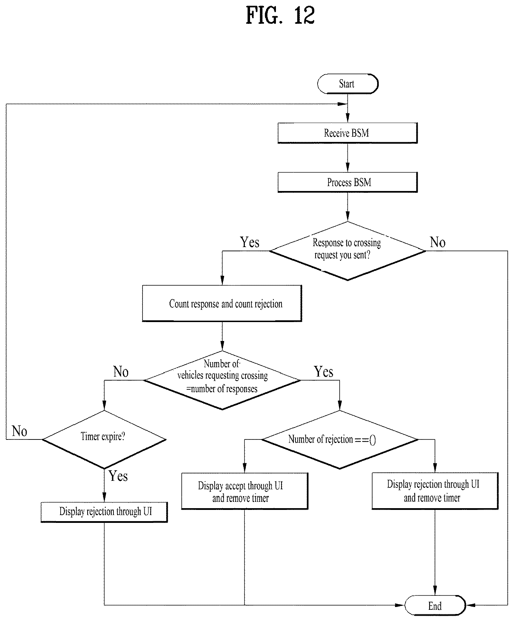

The UE may display crossing request acceptance information only when approval for the crossing request from all selected vehicles is received before expiration of a predetermined timer. The SoftV2X APP of the pedestrian is on standby to receive all responses from target vehicles or until the timer set when transmitting the request expires. When there is a response to a request to cross a road in the BSM received from the vehicle, and a pedestrian ID in the response is the same as an ID of the pedestrian, the corresponding response is considered as a response to the request transmitted by the pedestrian. When there is one or more rejection responses from the responses of the target vehicles, or when the timer expires, information indicting that the request is rejected is transmitted to the pedestrian through the UE (e.g., (a) of FIG. 11), and otherwise, information indicating that the request is accepted is transmitted (e.g., (b) of FIG. 11). FIG. 12 illustrates a procedure from when a UE receives a BSM to when the UE displays a rejection or acceptance indication, according to the above descriptions.

Depending on a response, the pedestrian crosses a street. When the pedestrian crosses the street after indicating the acceptance request, the UE may transmit a PSM including a cross state flag related to collision risk notification. When there is a vehicle at risk of collision while the pedestrian crosses the street, the cross state flag in the PSM is used to notify surrounding vehicles of the risk of collision. Although a target vehicle is excluded from the target vehicle at the time of performing the above procedure, there is a risk of collision with the pedestrian crossing the road due to movement of the vehicle. A vehicle that receives a PSM set with a cross state flag from a pedestrian has a risk of collision with the pedestrian, and thus the vehicle determines whether the vehicle collides with the pedestrian and informs the pedestrian of this through the UI.

When the pedestrian completes crossing the road, a PSM with the cross state flag cleared is transmitted to notify surrounding vehicles that the pedestrian has completely crossed the road. That is, the UE may transmit the PSM with the cross state flag cleared when the pedestrian ends crossing.

In the above description, the operations do not necessarily mean that the operations need to be performed as a whole, and in some cases, a combination of some operation(s) may be performed, or some operations may be omitted. In addition, information that is not explicitly mentioned in each operation but is obvious to those skilled in the art may be considered to fall within the scope of the present disclosure.

A user equipment (UE) based on the above-described embodiment may include at least one processor, and at least one computer memory operatively connected to the at least one processor and configured to store instructions that when executed cause the at least one processor to perform operations, and in this case, the operations may include receiving a crossing input from a pedestrian, setting a predetermined area on a roadway based on a location of the pedestrian, selecting a vehicle that is likely to collide during crossing of the pedestrian from among vehicles in the predetermined area, based on that the selected vehicle is one or more vehicles, transmitting a personal safety message (PSM) including information related to a crossing request of the pedestrian, to be transmitted to the one or more vehicles, receiving a basic safety message (BSM) including a response to the crossing request, transmitted from each of the one or more vehicles, and based on the response, displaying crossing request acceptance information on a display unit by the UE.

Provided is a processor for performing operations for a UE based on the above-described embodiment, and the operations may include receiving a crossing input from a pedestrian, setting a predetermined area on a roadway based on a location of the pedestrian, selecting a vehicle that is likely to collide during crossing of the pedestrian from among vehicles in the predetermined area, based on that the selected vehicle is one or more vehicles, transmitting a personal safety message (PSM) including information related to a crossing request of the pedestrian, to be transmitted to the one or more vehicles, receiving a basic safety message (BSM) including a response to the crossing request, transmitted from each of the one or more vehicles, and based on the response, displaying crossing request acceptance information on a display unit by the UE.

In the above-described embodiment, an application (App) may be at least one computer program that includes instructions that when executed by at least one processor cause the at least one processor to perform operations for a relay UE. Provided is a non-volatile computer-readable storage medium storing the computer program, and the operations may include receiving a crossing input from a pedestrian, setting a predetermined area on a roadway based on a location of the pedestrian, selecting a vehicle that is likely to collide during crossing of the pedestrian from among vehicles in the predetermined area, based on that the selected vehicle is one or more vehicles, transmitting a personal safety message (PSM) including information related to a crossing request of the pedestrian, to be transmitted to the one or more vehicles, receiving a basic safety message (BSM) including a response to the crossing request, transmitted from each of the one or more vehicles, and based on the response, displaying crossing request acceptance information on a display unit by the UE.

### Examples of communication systems applicable to the present disclosure

The various descriptions, functions, procedures, proposals, methods, and/or operational flowcharts of the present disclosure described in this document can be applied to, without being limited to, a variety of fields requiring wireless communication/connection (e.g., 5G) between devices.

Hereinafter, a description will be given in more detail with reference to the drawings. In the following drawings/description, the same reference symbols can denote the same or corresponding hardware blocks, software blocks, or functional blocks unless described otherwise.

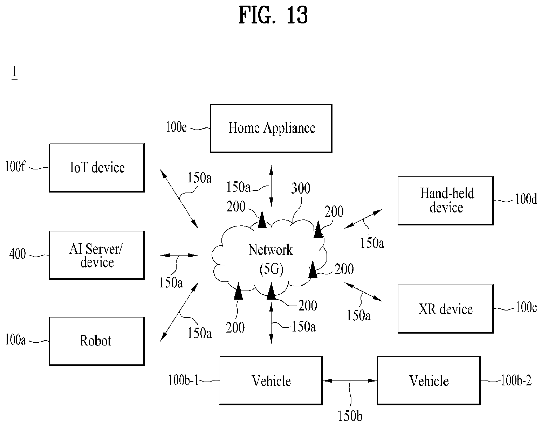

FIG. 13 illustrates a communication system 1 applied to the present disclosure.

Referring to FIG. 13, a communication system 1 applied to the present disclosure includes wireless devices, BSs, and a network. Herein, the wireless devices represent devices performing communication using RAT (e.g., 5G NR or LTE) and can be referred to as communication/radio/5G devices. The wireless devices can include, without being limited to, a robot 100a, vehicles 100b-1 and 100b-2, an extended reality (XR) device 100c, a hand-held device 100d, a home appliance 100e, an Internet of things (IoT) device 100f, and an artificial intelligence (AI) device/server 400. For example, the vehicles can include a vehicle having a wireless communication function, an autonomous driving vehicle, and a vehicle capable of performing communication between vehicles. Herein, the vehicles can include an unmanned aerial vehicle (UAV) (e.g., a drone). The XR device can include an augmented reality (AR)/virtual reality (VR)/mixed reality (MR) device and can be implemented in the form of a head-mounted device (HMD), a head-up display (HUD) mounted in a vehicle, a television, a smartphone, a computer, a wearable device, a home appliance device, a digital signage, a vehicle, a robot, etc. The hand-held device can include a smartphone, a smartpad, a wearable device (e.g., a smartwatch or a smartglasses), and a computer (e.g., a notebook). The home appliance can include a TV, a refrigerator, and a washing machine. The IoT device can include a sensor and a smartmeter. For example, the BSs and the network can be implemented as wireless devices and a specific wireless device 200a can operate as a BS/network node with respect to other wireless devices.

The wireless devices 100a to 100f can be connected to the network 300 via the BSs 200. An AI technology can be applied to the wireless devices 100a to 100f and the wireless devices 100a to 100f can be connected to the AI server 400 via the network 300. The network 300 can be configured using a 3G network, a 4G (e.g., LTE) network, or a 5G (e.g., NR) network. Although the wireless devices 100a to 100f can communicate with each other through the BSs 200/network 300, the wireless devices 100a to 100f can perform direct communication (e.g., sidelink communication) with each other without passing through the BSs/network. For example, the vehicles 100b-1 and 100b-2 can perform direct communication (e.g. V2V/V2X communication). The IoT device (e.g., a sensor) can perform direct communication with other IoT devices (e.g., sensors) or other wireless devices 100a to 100f.

Wireless communication/connections 150a, 150b, or 150c can be established between the wireless devices 100a to 100f/BS 200, or BS 200/BS 200. Herein, the wireless communication/connections can be established through various RATs (e.g., 5G NR) such as UL/DL communication 150a, sidelink communication 150b (or, D2D communication), or inter BS communication (e.g., relay, integrated access backhaul (IAB)). The wireless devices and the BSs/the wireless devices can transmit/receive radio signals to/from each other through the wireless communication/connections 150a and 150b. For example, the wireless communication/connections 150a and 150b can transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, can be performed based on the various proposals of the present disclosure.

### Examples of wireless devices applicable to the present disclosure

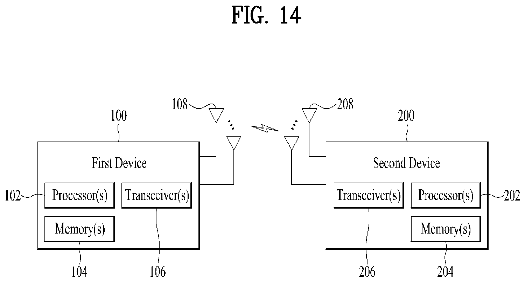

FIG. 14 illustrates wireless devices according to embodiments of the present disclosure.

Referring to FIG. 14, a first wireless device 100 and a second wireless device 200 can transmit radio signals through a variety of RATs (e.g., LTE and NR). Herein, the first wireless device 100 and the second wireless device 200 can correspond to the wireless device 100x and the BS 200 and/or two of the wireless devices 100a-100fof FIG. 13.

The first wireless device 100 can include one or more processors 102 and one or more memories 104 and additionally further include one or more transceivers 106 and/or one or more antennas 108. The processor(s) 102 can control the memory(s) 104 and/or the transceiver(s) 106 and can be configured to implement the descriptions, functions, procedures, proposals, methods, and/or operational flowcharts disclosed in this document. For example, the processor(s) 102 can process information within the memory(s) 104 to generate first information/signals and then transmit radio signals including the first information/signals through the transceiver(s) 106. The processor(s) 102 can receive radio signals including second information/signals through the transceiver 106 and then store information obtained by processing the second information/signals in the memory(s) 104. The memory(s) 104 can be connected to the processor(s) 102 and can store a variety of information related to operations of the processor(s) 102. For example, the memory(s) 104 can store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 can be a part of a communication modem/circuit/chip designed to implement RAT (e.g., LTE or NR). The transceiver(s) 106 can be connected to the processor(s) 102 and transmit and/or receive radio signals through one or more antennas 108. Each of the transceiver(s) 106 can include a transmitter and/or a receiver. The transceiver(s) 106 can be interchangeably used with Radio Frequency (RF) unit(s). In the present disclosure, the wireless device can represent a communication modem/circuit/chip.

The second wireless device 200 can include one or more processors 202 and one or more memories 204 and additionally further include one or more transceivers 206 and/or one or more antennas 208. The processor(s) 202 can control the memory(s) 204 and/or the transceiver(s) 206 and can be configured to implement the descriptions, functions, procedures, proposals, methods, and/or operational flowcharts disclosed in this document. For example, the processor(s) 202 can process information within the memory(s) 204 to generate third information/signals and then transmit radio signals including the third information/signals through the transceiver(s) 206. The processor(s) 202 can receive radio signals including fourth information/signals through the transceiver(s) 106 and then store information obtained by processing the fourth information/signals in the memory(s) 204. The memory(s) 204 can be connected to the processor(s) 202 and can store a variety of information related to operations of the processor(s) 202. For example, the memory(s) 204 can store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 can be a part of a communication modem/circuit/chip designed to implement RAT (e.g., LTE or NR). The transceiver(s) 206 can be connected to the processor(s) 202 and transmit and/or receive radio signals through one or more antennas 208. Each of the transceiver(s) 206 can include a transmitter and/or a receiver. The transceiver(s) 206 can be interchangeably used with RF unit(s). In the present disclosure, the wireless device can represent a communication modem/circuit/chip.

Hereinafter, hardware elements of the wireless devices 100 and 200 will be described more specifically. One or more protocol layers can be implemented by, without being limited to, one or more processors 102 and 202. For example, the one or more processors 102 and 202 can implement one or more layers (e.g., functional layers such as PHY, MAC, RLC, PDCP, RRC, and SDAP). The one or more processors 102 and 202 can generate one or more Protocol Data Units (PDUs) and/or one or more service data unit (SDUs) according to the descriptions, functions, procedures, proposals, methods, and/or operational flowcharts disclosed in this document. The one or more processors 102 and 202 can generate messages, control information, data, or information according to the descriptions, functions, procedures, proposals, methods, and/or operational flowcharts disclosed in this document. The one or more processors 102 and 202 can generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 can receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 can be referred to as controllers, microcontrollers, microprocessors, or microcomputers. The one or more processors 102 and 202 can be implemented by hardware, firmware, software, or a combination thereof. As an example, one or more application specific integrated circuits (ASICs), one or more digital signal processors (DSPs), one or more digital signal processing devices (DSPDs), one or more programmable logic devices (PLDs), or one or more field programmable gate arrays (FPGAs) can be included in the one or more processors 102 and 202. The descriptions, functions, procedures, proposals, methods, and/or operational flowcharts disclosed in this document can be implemented using firmware or software and the firmware or software can be configured to include the modules, procedures, or functions. Firmware or software configured to perform the descriptions, functions, procedures, proposals, methods, and/or operational flowcharts disclosed in this document can be included in the one or more processors 102 and 202 or stored in the one or more memories 104 and 204 to be driven by the one or more processors 102 and 202. The descriptions, functions, procedures, proposals, methods, and/or operational flowcharts disclosed in this document can be implemented using firmware or software in the form of code, commands, and/or a set of commands.

The one or more memories 104 and 204 can be connected to the one or more processors 102 and 202 and store various types of data, signals, messages, information, programs, code, instructions, and/or commands. The one or more memories 104 and 204 can be configured by read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 can be located at the interior and/or exterior of the one or more processors 102 and 202. The one or more memories 104 and 204 can be connected to the one or more processors 102 and 202 through various technologies such as wired or wireless connection.

The one or more transceivers 106 and 206 can transmit user data, control information, and/or radio signals/channels, mentioned in the methods and/or operational flowcharts of this document, to one or more other devices. The one or more transceivers 106 and 206 can receive user data, control information, and/or radio signals/channels, mentioned in the descriptions, functions, procedures, proposals, methods, and/or operational flowcharts disclosed in this document, from one or more other devices. For example, the one or more transceivers 106 and 206 can be connected to the one or more processors 102 and 202 and transmit and receive radio signals. For example, the one or more processors 102 and 202 can perform control so that the one or more transceivers 106 and 206 can transmit user data, control information, or radio signals to one or more other devices. The one or more processors 102 and 202 can perform control so that the one or more transceivers 106 and 206 can receive user data, control information, or radio signals from one or more other devices. The one or more transceivers 106 and 206 can be connected to the one or more antennas 108 and 208 and the one or more transceivers 106 and 206 can be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas can be a plurality of physical antennas or a plurality of logical antennas (e.g., antenna ports). The one or more transceivers 106 and 206 can convert received radio signals/channels etc. from RF band signals into baseband signals in order to process received user data, control information, radio signals/channels, etc. using the one or more processors 102 and 202. The one or more transceivers 106 and 206 can convert the user data, control information, radio signals/channels, etc. processed using the one or more processors 102 and 202 from the base band signals into the RF band signals. To this end, the one or more transceivers 106 and 206 can include (analog) oscillators and/or filters.

### Examples of a vehicle or an autonomous driving vehicle applicable to the present disclosure

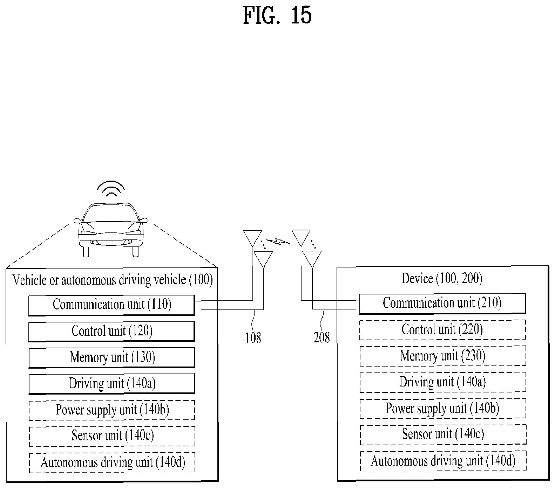

FIG. 15 illustrates a vehicle or an autonomous driving vehicle according to an embodiment of the present disclosure. The vehicle or autonomous driving vehicle can be implemented by a mobile robot, a car, a train, a manned/unmanned aerial vehicle (AV), a ship, etc.

Referring to FIG. 15, a vehicle or autonomous driving vehicle 100 can include an antenna unit 108, a communication unit 110 (e.g., transceiver), a control unit 120 (e.g., controller or processor), a driving unit 140a, a power supply unit 140b, a sensor unit 140c, and an autonomous driving unit 140d. The antenna unit 108 can be configured as a part of the communication unit 110.

The communication unit 110 can transmit and receive signals (e.g., data and control signals) to and from external devices such as other vehicles, BSs (e.g., gNBs and road side unit devices), and servers. The control unit 120 can perform various operations by controlling elements of the vehicle or the autonomous driving vehicle 100. The control unit 120 can include an ECU. The driving unit 140a can cause the vehicle or the autonomous driving vehicle 100 to drive on a road. The driving unit 140a can include an engine, a motor, a powertrain, a wheel, a brake, a steering device, etc. The power supply unit 140b can supply power to the vehicle or the autonomous driving vehicle 100 and include a wired/wireless charging circuit, a battery, etc. The sensor unit 140c can acquire a vehicle state, ambient environment information, user information, etc. The sensor unit 140c can include an inertial measurement unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d can implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 can receive map data, traffic information data, etc. from an external server. The autonomous driving unit 140d can generate an autonomous driving path and a driving plan from the obtained data. The control unit 120 can control the driving unit 140a such that the vehicle or the autonomous driving vehicle 100 can move along the autonomous driving path according to the driving plan (e.g., speed/direction control). In the middle of autonomous driving, the communication unit 110 can aperiodically/periodically acquire recent traffic information data from the external server and acquire surrounding traffic information data from neighboring vehicles. In the middle of autonomous driving, the sensor unit 140c can obtain a vehicle state and/or surrounding environment information. The autonomous driving unit 140d can update the autonomous driving path and the driving plan based on the newly obtained data/information. The communication unit 110 can transfer information about a vehicle position, the autonomous driving path, and/or the driving plan to the external server. The external server can predict traffic information data using AI technology, etc., based on the information collected from vehicles or autonomous driving vehicles and provide the predicted traffic information data to the vehicles or the autonomous driving vehicles.

### Examples of a vehicle and AR/VR applicable to the present disclosure

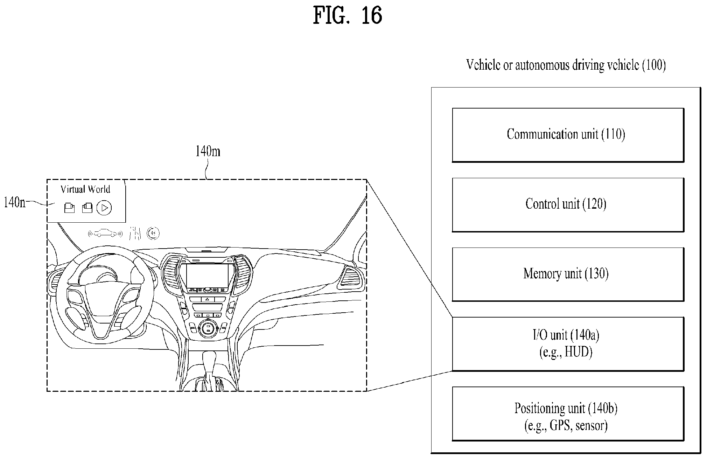

FIG. 16 illustrates a vehicle applied to the present disclosure. The vehicle can be implemented as a transport means, an aerial vehicle, a ship, etc.

Referring to FIG. 16, a vehicle 100 can include a communication unit 110, a control unit 120, a memory unit 130, an I/O unit 140a, and a positioning unit 140b.

The communication unit 110 can transmit and receive signals (e.g., data and control signals) to and from external devices such as other vehicles or BSs. The control unit 120 can perform various operations by controlling constituent elements of the vehicle 100. The memory unit 130 can store data/parameters/programs/code/commands for supporting various functions of the vehicle 100. The I/O unit 140a can output an AR/VR object based on information within the memory unit 130. The I/O unit 140a can include an HUD. The positioning unit 140b can acquire information about the position of the vehicle 100. The position information can include information about an absolute position of the vehicle 100, information about the position of the vehicle 100 within a traveling lane, acceleration information, and information about the position of the vehicle 100 from a neighboring vehicle. The positioning unit 140b can include a GPS and various sensors.

As an example, the communication unit 110 of the vehicle 100 can receive map information and traffic information from an external server and store the received information in the memory unit 130. The positioning unit 140b can obtain the vehicle position information through the GPS and various sensors and store the obtained information in the memory unit 130. The control unit 120 can generate a virtual object based on the map information, traffic information, and vehicle position information and the I/O unit 140a can display the generated virtual object in a window in the vehicle (1410 and 1420). The control unit 120 can determine whether the vehicle 100 normally drives within a traveling lane, based on the vehicle position information. If the vehicle 100 abnormally exits from the traveling lane, the control unit 120 can display a warning on the window in the vehicle through the I/O unit 140a. In addition, the control unit 120 can broadcast a warning message regarding driving abnormity to neighboring vehicles through the communication unit 110. According to situation, the control unit 120 can transmit the vehicle position information and the information about driving/vehicle abnormality to related organizations.

### INDUSTRIAL APPLICABILITY

The above-described embodiments of the present disclosure are applicable to various mobile communication systems.

## Claims

1. An operation method of a user equipment (UE) in a wireless communication system, the operation method comprising:
receiving a crossing input from a pedestrian by the UE;
setting a predetermined area on a roadway based on a location of the pedestrian;
selecting a vehicle that is likely to collide during crossing of the pedestrian from among vehicles in the predetermined area;
based on that the selected vehicle is one or more vehicles, transmitting a personal safety message (PSM) including information related to a crossing request of the pedestrian, to be transmitted to the one or more vehicles, by the UE;
receiving a basic safety message (BSM) including a response to the crossing request, transmitted from each of the one or more vehicles; and
based on the response, displaying crossing request acceptance information on a display unit by the UE.

2. The operation method of claim 1, wherein information related to the crossing request includes a vehicle list field as a set of identifiers of the selected vehicles.

3. The operation method of claim 1, wherein the crossing input is one of input through a request button of a user interface (UI) of the UE, input through voice recognition, input through a predetermined gesture of the pedestrian, and input after the UE determines crossing intention of the pedestrian.

4. The operation method of claim 1, wherein the predetermined area is an area input from the pedestrian or is determined by the UE based on a road width, a lane, and a speed limit.

5. The operation method of claim 1, wherein the selected vehicle is any vehicle except a vehicle with a speed of 0 within the predetermined area.

6. The operation method of claim 1, wherein the selected vehicle is a vehicle of which an expected collision time with the pedestrian within the predetermined area falls between a first threshold and a second threshold.

7. The operation method of claim 6, wherein the first threshold is a minimum time required from a time of receiving the crossing input to a time of displaying the crossing request acceptance information, and
the second threshold is one of a value input from a user, a value determined based on measurement, and a value determined by the UE.

8. The operation method of claim 1, wherein the selected vehicle is a vehicle closest to the pedestrian for each lane within the predetermined area.

9. The operation method of claim 1, wherein the PSM is transmitted to a message queuing telemetry transport (MQTT) server, and the MQTT server transmits the PSM to the one or more vehicles in unicast.

10. The operation method of claim 1, wherein the PSM containing information related to the crossing request is transmitted immediately regardless of a period of the PSM.

11. The operation method of claim 1, wherein the UE displays the crossing request acceptance information only when approval for the crossing request from all selected vehicles is received before expiration of a predetermined timer.

12. The operation method of claim 1, wherein, during crossing of the pedestrian after indicating the acceptance request, the UE transmits a PSM including a cross state flag related to collision risk notification.

13. The operation method of claim 12, wherein the UE transmits the PSM with a cross state flag cleared when the pedestrian ends crossing.

14. The operation method of claim 1, wherein, based on absence of the selected vehicle, the UE displays crossing request acceptance information on a display unit.

15. The operation method of claim 13, wherein the UE communicates with at least one of another UE, a UE related to an autonomous driving vehicle, a base station (BS), or a network.

16. A user equipment (UE) in a wireless communication system, the UE comprising:
at least one processor; and
at least one computer memory operatively connected to the at least one processor and configured to store instructions that when executed causes the at least one processor to perform operations,
wherein the operations include:
receiving a crossing input from a pedestrian;
setting a predetermined area on a roadway based on a location of the pedestrian;
selecting a vehicle that is likely to collide during crossing of the pedestrian from among vehicles in the predetermined area;
based on that the selected vehicle is one or more vehicles, transmitting a personal safety message (PSM) including information related to a crossing request of the pedestrian, to be transmitted to the one or more vehicles;
receiving a basic safety message (BSM) including a response to the crossing request, transmitted from each of the one or more vehicles; and
based on the response, displaying the crossing request acceptance information on a display unit by the UE.

17. A processor for performing operations for a user equipment (UE) in a wireless communication system, the operations comprising:
receiving a crossing input from a pedestrian;
setting a predetermined area on a roadway based on a location of the pedestrian;
selecting a vehicle that is likely to collide during crossing of the pedestrian from among vehicles in the predetermined area;
based on that the selected vehicle is one or more vehicles, transmitting a personal safety message (PSM) including information related to a crossing request of the pedestrian, to be transmitted to the one or more vehicles;
receiving a basic safety message (BSM) including a response to the crossing request, transmitted from each of the one or more vehicles; and
based on the response, displaying the crossing request acceptance information on a display unit by the UE.

18. A non-volatile computer-readable storage medium storing at least one computer program including an instruction that when executed by at least one processor causes the at least one processor to perform operations for a relay user equipment (UE), the operations comprising:
receiving a crossing input from a pedestrian;
setting a predetermined area on a roadway based on a location of the pedestrian;
selecting a vehicle that is likely to collide during crossing of the pedestrian from among vehicles in the predetermined area;
based on that the selected vehicle is one or more vehicles, transmitting a personal safety message (PSM) including information related to a crossing request of the pedestrian, to be transmitted to the one or more vehicles;
receiving a basic safety message (BSM) including a response to the crossing request, transmitted from each of the one or more vehicles; and
based on the response, displaying the crossing request acceptance information on a display unit by the UE.
